# EUROPEAN PATENT APPLICATION

(11) **EP 3 720 139 A1**
(43) Date of publication of application: **07.10.2020**
(21) Application number: 19305432.7
(22) Date of filing: 01.04.2019
(51) Int. Cl.: H04N 21/422, H04N 21/436, H04N 21/443

(54) **CONTROLLING CONNECTED TV WITH A MOBILE DEVICE**

(71) Applicant: Ontvlab Limited, Hong-Kong (HK)
(72) Inventor: OLIVIER, Arnaud, Hong-Kong (HK)
(74) Representative: Gabriel, Franck

(57) **Abstract**

A set top box (STB) comprises set top box processing components (µP_{STB}), a set top box memory (MEM_{STB}), a tuner module (TUN) and an interface module (INT). The set top box (STB) is arranged to be connected to Internet (IP). The set top box (STB) comprises operating system (OS) and drivers (DRV), a middleware layer (MW), a simplified application (SAPP) and an adaptation layer (ADL), but does not comprise applications (APP) and application interface (API) such that only tuning (TNG), video decoding (VIDDEC), audio decoding (AUDDEC), security/authentication/decrypting (SEC) and error notification (ERMSG) functionalities are provided by the set top box (STB). A mobile device (MD) comprises mobile device processing components (µP_{MD}), a mobile device memory (MEM_{MD}), a connection interface (CNI) to a mobile network (MN) and/or Internet (IP) and a user interface (UI_{MD}). The mobile device (MD) comprises a remote application (RAPP) and a user interface application (UIA). The mobile device (MD) cooperates with the set top box (STB) connectable to the television (TV) such that the television is operated according to control command requested by the user by means of the mobile device (MD).

## Description

### TECHNICAL FIELD

The invention relates to a method of controlling a connected television by a mobile device. The invention also relates to a connected television system comprising a set top box connectable to a television and a mobile device associated with the set top box, the system implementing said controlling method. The invention also relates to a set top box and an integrated television set. The invention is particularly applicable to the domain of digital television, namely connected television, connected set top box and integrated digital television. Mobile devices comprise all types of computing devices small enough to hold and operate in the hand such as currently widely deployed smartphones or tablets.

### BACKGROUND

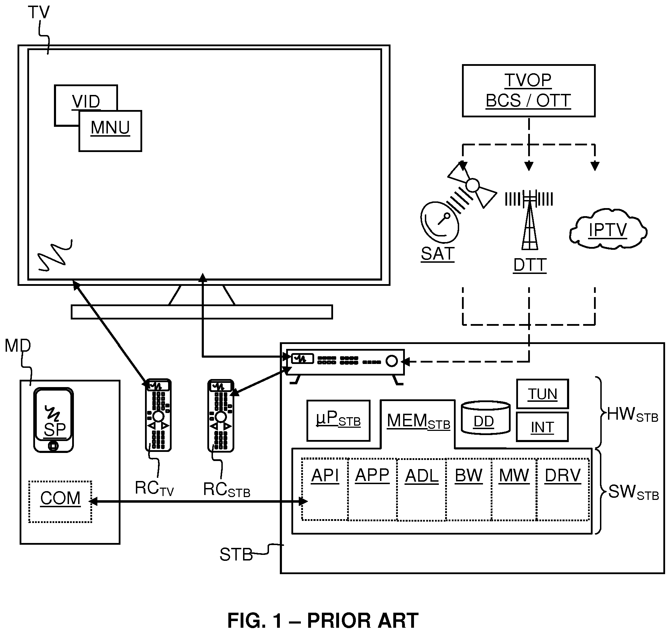

FIG. 1 is a schematic view of a connected television, namely the association of a television set TV and a set top box STB. The set top box STB is a device that comprises a TV-tuner TUN input INT connected to an external source of signal and delivers an output signal to a television TV set. The set top box STB converts said signal into content in a form (e.g. video VID) that can be displayed on the television TV set. In particular, the set top box STB is used to decrypt said signal containing particular contents offered by television operators TVOP proposing broadcasting services BCS, such contents being often subject to carrier-controlled access restrictions. As examples, such contents include interactive services like Video on Demand (VoD), Programs Guide, pay per view, television home shopping, etc.... Typically, set top boxes are used in cable and/or satellite television system SAT, over-the-air digital television system DDT or internet television IPTV. A remote control RC_{STB} is used by a user to interact with the set top box STB.

The Over the Top or online services OTT such as Video On Demand VoD, programs guide, quick search, trailers, etc... request the development of a set top box STB that are more and more complex. Such a set top box STB needs a very advanced software SW_{STB} architecture, a heavier memory flash size and a high memory consumption (memory of the Double Data Rate DDR type) MEM_{STB}. Further, user interfaces shall be quick, fluid and at the same time rich in contents (e.g. photos, trailers, video promotion, quick search functionalities, etc...). These requirements result in set top boxes STB having powerful processing components µP_{STB} and important active memory MEM_{STB}. Further, these requirements also result in complex software SW_{STB} requesting long and costly development. Typically, the software SW_{STB} layer includes operating system and drivers DRV, a middleware MW, a web browser BW, an adaptation layer ADL, applications APP and an application interface API. The time to market is often more than two years. The maintenance and subsequent evolutions are very costly. Furthermore, the result is often disappointing for the television operators and broadcast companies, and also the end users because of painful software stabilization (e.g. bug fixing), security failures, and weaknesses resulting from the number of software layers, the open source modules or the operating system (e.g. Linux, Android TV, java script, browser,...).

Furthermore, from the end user' point of view, the selection of a content through a menu MNU displayed on the television TV screen is often complex and slow, and hides the content currently displayed on the television screen, for example a video VID. In particular, navigation with a remote control RC_{STB} is not user friendly compared to navigation on a touch screen of mobile device MD like a smartphone SP or a computer tablet. Attempts were made to use a mobile device MD like a remote control for controlling the set top box STB. For example, the document CN102404637 describes a system and a method for remotely controlling a television through a smart phone. As a result, the navigation in the menu with the touch screen of the mobile device by the end user is improved. However, a first drawback of such a solution is that the set top box STB requires an additional application interface API in the software layer SW_{STB} enabling the mobile device MD to send command COM to the set top box STB, and the set top box STB to manage the command COM following an approval process. Further, the television TV screen still remains the place where communication of information (e.g. through menu MNU) to end user is made. Such a solution improves the ease of use of the set top box STB but does not simplify the set top box STB itself that can still be fully controlled by the remote control RC_{STB}. To the contrary, the software layer SW_{STB} of the set top box STB is even more complex because both modes of control are possible. A further drawback of such a solution is that they are based on operating the set top box via the smart phone through the internet (http connection).

### SUMMARY OF THE DISCLOSURE

It is an object of the invention to propose a method of controlling a connected television that overcomes one or more of the limitations or drawbacks of the existing connected televisions and associated set top boxes. In particular, an object of the invention is to simplify the set top box hardware and software. It is another object of the invention to propose to television users an enhanced ergonomic and an easy way of controlling television.

According to one aspect, there is provided a method of controlling a connected television by a mobile device according to the set of appended claims.

According to another aspect, there is provided a system comprising a set top box connectable to a television and a mobile device associated with the set top box, the system being arranged to implement the above mentioned connected television controlling method of the invention.

According to still a further aspect, there is provided a set top box connectable to a television arranged to implement the above mentioned connected television controlling method of the invention when associated to a mobile device.

According to still a further aspect, there is provided an integrated television set including a built-in connected television and a built-in set top box wherein the built-in set top box is arranged to implement the above mentioned connected television controlling method of the invention when associated with a mobile device.

With the invention, only the main and mandatory functionalities of the set top box are maintained in the set top box software, these functionalities include tuning, audio and video decoding, security/authentication/decrypting (Conditional Access Scrambling CAS and Digital Right Management DRM), error notification and eventually recording functions. All the others functionalities are transferred in the mobile device as applications. The intelligence to control the television is now in the mobile device rather than in the set top box. Thus, with the invention, it is possible to operate digital television in an efficient manner with a basic set top box that is simple, cheap and uses small internal memory. For example, it is possible to decrease the internal memory of the set top box by a factor four, at least a factor three.

Other advantages will become apparent from the hereinafter description of the invention.

### BRIEF DESCRIPTION OF THE DRAWINGS

The present invention is illustrated by way of examples and not limited to the accompanying drawings, in which like references indicate similar elements:
- FIG. 1 is a schematic view of a connected television according to the prior art;
- FIG. 2 is a schematic view of a connected television according to the invention;
- FIG. 3 is a schematic view illustrating the method of controlling a connected television associated with a set top box by means of a mobile device according to the invention; and
- FIGS. 4 and 5 are schematic views illustrating various embodiments of a set top box of the invention.

### DETAILED DESCRIPTION

The invention will be understood from the following description, in which reference is made to the accompanying drawings.

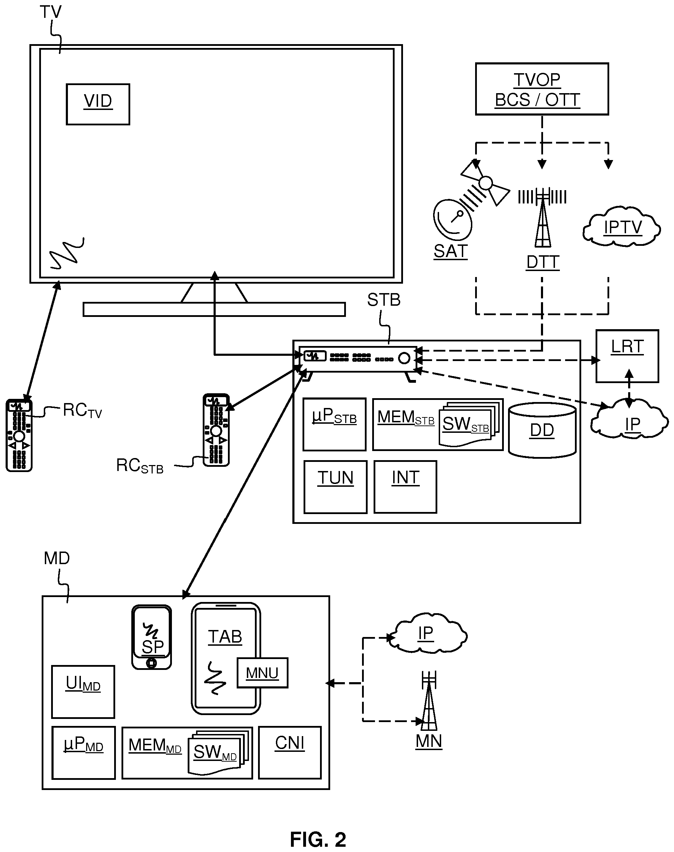

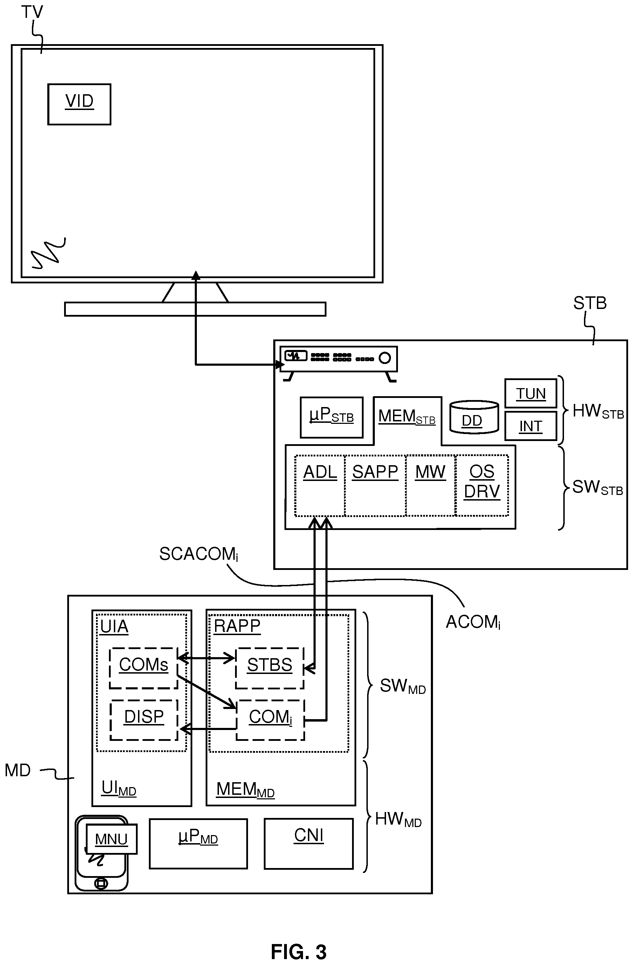

FIG. 2 is a schematic view of a connected television according to the invention. FIG. 3 is a schematic view illustrating the method of controlling said connected television associated with a set top box STB by means of a mobile device MD.

### The set top box STB:

The set top box STB includes a hardware layer HW_{STB} and a software layer SW_{STB}.

Concerning the hardware layer HW_{STB}, the set top box STB comprises processing components µP_{STB}, a memory of the Double Data Rate DDR type MEM_{STB}, a tuner module TUN and an interface module INT. Optionally, the set top box STB may further comprise a hard drive DD for storing large data files RECₙ like videos and a flash memory (not shown). The tuner module TUN cooperating with the processing components µP_{STB} are adapted for decoding the received signal (e.g. broadcast, IPTV, encrypted signal, DVB or IPTV, SD, HD or 4K, etc...). The decoded signal is then transmitted to the television TV screen and displayed. The interface module INT may includes a WiFi (i.e. a wireless local area network) or WiFi dongo interface, an Ethernet port ETH, an High-Definition Multimedia Interface HDMI port and/or other type of port Misc.

The set top box STB is arranged to be connectable to Internet IP and/or to a local router LRT via the interface module INT.

Concerning the software layer SW_{STB}, the set top box STB includes operating system OS and drivers DRV, a middleware layer MW, an adaptation layer ADL and simplified applications SAPP. The software layer SW_{STB} does not include an application interface API.

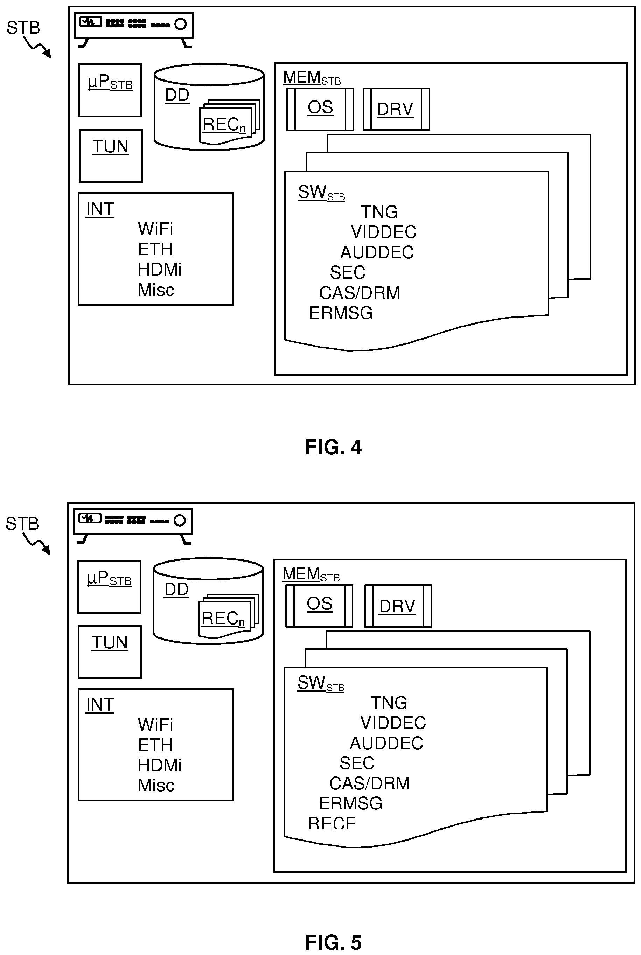

Only the main and mandatory functionalities of the set top box STB are maintained in the set top box software layer SW_{STB}, these functionalities include tuning TNG, video decoding VIDDEC, audio decoding AUDDEC, security/authentication/decrypting SEC using Conditional Access Scrambling CAS and/or Digital Right Management DRM mechanisms, error notification ERMSG as depicted in FIG. 5. Other basic functions may also be implemented like a recording function RECF as depicted in FIG. 6.

According to an alternative, both the television TV and the set top box STB may be built-in together in the same device, namely in an integrated digital television set.

### The mobile device MD:

The mobile device MD includes a hardware layer HW_{MD} and a software layer SW_{MD}. For example, the mobile device MD may be a smartphone SP, a computer tablet TAB or any other kind of mobile device connectable to internet.

Concerning the hardware layer HW_{MD}, the mobile device MD comprises processing components µP_{MD}, a memory MEM_{MD}, a connection interface CNI to a mobile network MN and/or internet IP and a user interface UI_{MD}.

Concerning the software layer SW_{MD}, the mobile device MD includes a remote application RAPP and a user interface application UIA.

The remote application RAPP is the part of the software, namely an equivalent to the applications APP of the set top box STB according to the prior art that has been transferred to the mobile device MD. The remote application RAPP has three main functions.

A first function is a connection function. The connection function manages the connection between the mobile device MD and the set top box STB. This includes initiating the connection, maintaining the connection alive and/or notifying when a disconnection occurs. This will be explained in details hereinafter with respect to the mobile device MD and set top box STB connection part.

A second function is a status function. The status function consists in constantly checking STBS the set top box STB status, checking for update and updating the software layer SW_{STB} of the set top box STB.

A third function is a user command function. FIG. 3 is an example schematically illustrating the method of controlling the connected television TV associated with the set top box STB by means of the mobile device MD by implementing such a user command function. The user command function manages commands requested by the user via the user interface UI_{MD} and the user interface application UIA on the mobile device MD and based on the status of the set top box STB. A user may request a command COMᵢ from a list of possible commands COMs available as an example in a menu MNU. Such a user requested command COMᵢ may be accepted, implemented and notified, or rejected and notified. When a command is rejected by the remote application RAPP, the remote application RAPP requests the display DISP on the mobile device MD of a message to notify the user (i.e. error message or information message). When a command is accepted by the remote application RAPP, the remote application RAPP transcodes the user requested command COMᵢ into an accepted command ACOMᵢ that is transmitted to the set top box STB via the adaptation layer ADL. Then, the remote application RAPP notifies and displays DISP when the accepted command has been completed by checking the status STBS of the set top box STB with respect to the accepted command SCACOMᵢ.

As an example, when a user selects with the mobile device MD a video VID to be played on the television TV screen, the remote application RAPP transforms the video playing command COMᵢ received from the user interface UI_{MD} into an accepted video playing command ACOMᵢ transmitted to the set top box STB such that the set top box STB instantly displays the video VID on the television TV screen. Simultaneously, the status of the set top box STB is updated SCACOMᵢ at the set top box STB and the corresponding status is also updated STBS at the remote application RAPP and displayed DISP at the user interface UI_{MD} by indicating that the video VID is currently displayed on the television TV screen.

Thus, the screen of the television TV is not used anymore to inform the user, but rather the screen of the mobile device MD is used. Further, a complex software application (and thus implied hardware) at the set top box STB is not anymore necessary to manage commands, but rather a mere adaptation layer ADL and a simplified application SAPP at the set top box STB are necessary. Such an adaptation layer ADL is simpler, faster and more secure than the prior art set top box applications layer. The television TV set's screen may only be used to display important error messages (e.g. lack of connection, connection lost, etc...) and not anymore command messages, menus, etc...

The user interface application UIA of the mobile device MD has two main functions.

A first function is a navigation function. The navigation function enables the user of the mobile device MD to navigate in the available contents or functionalities COMₛ by means for example of menu MNU.

The content displayed on the screen of the mobile device MD may be dependent on the status of the set top box STB. As an example, if there is a video stored in the hard drive DD of the set top box STB or if an external hard drive is connected to the set top box STB, a corresponding information concerning the availability of said video is displayed on the screen of the mobile device MD, e.g. in a video list page. As another example, if a new channel appears in the channel list, a corresponding logo of the channel is displayed on the screen of the mobile device MD, e.g. in a channel list page.

A second function is status displaying function. The status displaying function consist in maintaining the user up-to date with respect to the set top box STB status. With the status displaying function, any change of the set top box STB status is displayed on the screen of the mobile device MD. As an example, when an operation of recording video is finished, the status of the corresponding function changes at the set top box STB and the recording notification displayed on the screen of the mobile device MD disappears. As another example, the status displaying function displays error messages or any information message reported by the set top box STB or by the remote application RAPP. There are two types of error messages. A first type of error messages are generated and sent directly by the set top box STB to the mobile device MD. For example, the set top box STB can indicate that the hard drive DD is full, or that a recording is stopped, etc... A second type of error messages are generated by the remote application RAPP based on the set top box STB status analysis. For example, in case a user requests a television channel change while a recording is on-going, the remote application RAPP, based on the result of the status function, forbids the television channel change and proposes to the user to stop said recording.

The remote application RAPP may be implemented as a library that can be integrated in any application of the mobile device MD used to control the set top box STB.

The adaptation layer ADL of the set top box STB is arranged to be identified by the remote application RAPP of the mobile device MD as a recognized device (the connection mechanism will be explained in details below). A communication mechanism is implemented between the set top box STB and the mobile device MD. The communication mechanism enables maintaining a connection between the set top box STB and the mobile device MD alive. The communication mechanism also enables providing a notification when the connection is lost, such as when a disconnection is not requested by the user.

Thus, the mobile device MD is operating like a set top box remote control RC_{STB}, however in a far more ergonomic manner for the user.

### Mobile device MD and set top box STB connection:

In a first step, the user of the mobile device MD requests activation of the connection via the remote application RAPP. The remote application RAPP sends a connection query message on the local area network and identifies all the devices that are connected to Internet directly or via the local router LRT. The set top box STB listens the local area network and responds to the mobile device MD when receiving the connection query message. The adaptation layer ADL of the set top box STB generates a response message including the set top box identification. The remote application RAPP shows the list of identified devices including the set top box STB connectable to the mobile device MD. Then, the user of the mobile device MD selects the device corresponding to the set top box STB and a connection according to an Internet Protocol IP is established. This connection may be encrypted for security reason. For example, an encryption of the Advanced Encryption Standard (AES) type may be used.

Optionally, in case the set top box STB has already been connected one time and does not respond to a subsequent connection request, the remote application RAPP then displays a corresponding error message on the screen of the mobile device MD. Further, if the set top box STB is fitted with a « wake on wireless » functionality, the remote application RAPP can then wake up the set top box STB.

When not any mobile device MD can be connected to the set top box STB, or when the mobile device MD cannot be connected to internet or mobile network, or when the set top box cannot be connected to internet, then the set top box STB may also operate in a degraded mode. In the degraded mode, a user can still use the remote control RC_{STB} in order to play live channel, performs recording and time-shift (these functionalities are implemented by way of the simplified application SAPP). However, all the other functionalities will then not be possible due to the fact that most of functionalities are controlled via the mobile device MD only.

### Set top box STB status and update:

In a second step, namely as soon as the connection is established, the mobile device MD checks the set top box STB status. This may also include checking for software update and/or channel database update.

When checking for software update, the mobile device MD obtains the software release information from the set top box STB. Then, the mobile device MD verifies whether the software release of the set top box STB is compliant with the application release of the mobile device MD. The mobile device MD obtains compliance information from a back-end server of the television operator TVOP. The back-end server of the television operator TVOP may comprise a user management system (i.e. including user profile, login/password, subscription link), a content management system (i.e. including video metadata, channel list and channel information, Electronic program guides EPGs and interactive program guides IPGs) and an application management system (i.e. managing information and content that is to be displayed based on user profile and available content). In case of non-compliancy, the mobile device MD may either automatically update the software of the adaptation layer ADL of the set top box STB, or prompt the user to cause the update of said software to take place. More precisely, the remote application RAPP decides to update said software by comparing the software version in the set top box STB, the software version in the mobile device MD and the software version at the back-end server of the television operator TVOP. Based on an update decision, the remote application RAPP pushes the set top box STB to download an up-to-date software version from a specific web address (i.e. from a uniform resource locator URL).

When checking for the channel database update, two alternative methods may be used. The channel database may include the list of channel and related information like a program guide and/or any live content information. According to the first channel database update method, the set top box STB generally obtains updated channel database from the back-end server of the television operator TVOP based on the subscription with the television operator TVOP. Then, the mobile device MD obtains the channel database from the set top box STB. The first channel database update method is advantageous because the set top box STB can then be used with the remote control RC_{STB} only (i.e. without the mobile device MD). According to the second channel database update method, the mobile device MD directly obtains the channel database from the back-end server of the television operator TVOP based on said subscription. In this case, the installation on the set top box STB is not anymore necessary, the channel database being automatically downloaded from the back-end server of the television operator TVOP.

When checking for the set top box STB status, the mobile device MD obtains all possible status information available related to the status of the set top box STB. This status information may include the following as a non-exhaustive list of status information:
- Storage device: Is there a storage device like a mass storage key (e.g. USB stick) or an external hard disk drive connected? If any, is the storage device format compatible with the set top box STB? If any, what is the total size of the storage device and what is the currently available size?
- Internet IP connection: Has the set top box STB an internet connection? Does the set top box STB receive any signal from said internet connection? What is the speed/data rate possible with said internet connection?
- Volume: What is the level of the sound volume currently set on the set top box STB?
- Video format: What is the video format currently played on the set top box STB?
- Audio and subtitle: What is the audio selection and subtitle selection?
- Parental control: What is the parental control level defined?
- Current content being displayed: Is the set top box STB currently playing any content?
   ∘ In case the content is live content (e.g. source is broadcast or internet):
      ▪ What is the channel identification parameter?
      ▪ What is the parental control level of the live content? Is the parental control unblocked on the set top box STB?
      ▪ Is there a time-shift in progress?
      ▪ Is there any one touch record (i.e. recording can be launched by pressing a "record" touch)?
   ∘ In case the content is online video (e.g. source is internet):
      ▪ What is the video identification parameter?
      ▪ What is the time progress on the video (video progress bar)?
      ▪ What is the parental control level of the online video? Is the parental control unblocked on the set top box STB?
   ∘ In case the content is a stored video (e.g. source is the hard disk drive DD / media-player function):
      ▪ What is the stored video file name?
      ▪ What is the time progress on the video (video progress bar)?
- Recording: Is there any scheduled recording in progress? In case a scheduled recording is in progress:
   ∘ What is the channel identification parameter?
   ∘ What is the program identification parameter?
   ∘ When will the scheduled recording be completed?
- Downloading: Is there any video downloading in progress? In case a video downloading is in progress:
   ∘ What is the video identification parameter?
   ∘ Is a video downloading progress to be provided (downloading progress bar)?
- Listing:
   ∘ What is the list of scheduled recordings?
   ∘ What is the list of recordings stored in the hard disk drive DD?
   ∘ What is the list of downloaded videos stored in the hard disk drive DD?
   ∘ What is the list of contents stored in the hard disk drive DD?

The status of the set top box STB is maintained over time. Any update in the status information is notified by the adaptation layer ADL of the set top box STB to the remote application RAPP of the mobile device MD. Alternatively, any update in the status of the set top box STB may be checked by the remote application RAPP of the mobile device MD.

### Miscellaneous - basic functionalities:

The remote application RAPP of the mobile device MD may control the set top box STB easily and at any moment regarding particular functionalities.

An icon (bitmap) may be displayed on the screen of the mobile device MD in order to inform the user. By pressing this icon (bitmap), the remote application RAPP displays a control page including basic functions. Basic functions generally means functions enabling the user to control the viewing, like for example volume control, audio language, subtitles, instant recording, time-shift, pause, etc. As an example, the user may touch the icon (bitmap) on the screen of the mobile device MD in order to change the volume of the video displayed on the television TV screen.

The icon (bitmap) may also instantly provide information to the user, for example by indicating that something is playing on the television TV.

In case the mobile device MD goes in a standby mode, the remote application RAPP may display a short menu on a standby screen of the mobile device MD. The short menu may provide the above mentioned basic functions. Advantageously, the short menu may provide those functions without the user having to input his password. As an example, the user may then be able to change the volume of the video displayed on the television TV screen via the short menu even if the mobile device MD is in a standby mode.

### Miscellaneous - set top box STB standby and wake-up:

The remote application RAPP of the mobile device MD may control the set top box STB into a standby mode or into a wake-up mode.

The remote application RAPP of the mobile device MD proposes via a menu to the user to switch the set top box STB in the standby mode. If a user requests the set top box STB to be switched in the standby mode, the remote application RAPP of the mobile device MD stores in memory the connection information (e.g. IP / WiFi router / internet box) of the set top box STB.

A wake-up on wireless function may be implemented in the set top box STB. For example, the remote application RAPP of the mobile device MD proposes via a menu to the user or via an icon identifying the set top box STB to switch the set top box STB in the wake-up mode. This is advantageous to limit the consumption of the set top box STB in the standby mode by using a lower power WiFi mode.

The drawings and their description hereinbefore illustrate rather than limit the invention. It should be appreciated that embodiments of the present invention are adapted to control connected television by means of a mobile device like a smart phone or a tablet but not limited to the list of functionalities (see status information listing) presented therein as many other functionalities may be envisioned in the future. Further, the invention is also applicable to integrated television set including a built-in connected television and set top box that are fitted in a same device. In the integrated television set, the built-in set top box is arranged to implement the connected television controlling method of the invention when associated with a mobile device.

## Claims

1. A method of controlling a connected television by a mobile device (MD) and a set top box (STB) connectable to the television (TV), the set top box (STB) comprising, in a set top box hardware layer (HW_{STB}), set top box processing components (µP_{STB}), a set top box memory (MEM_{STB}), a tuner module (TUN) and an interface module (INT), the set top box (STB) being arranged to be connected to Internet (IP), the set top box (STB) comprising, in a set top box software layer (SW_{STB}), operating system (OS) and drivers (DRV), a middleware layer (MW), a simplified application (SAPP) and an adaptation layer (ADL), the set top box (STB) not comprising applications (APP) and application interface (API) such that only tuning (TNG), video decoding (VIDDEC), audio decoding (AUDDEC), security/authentication/decrypting (SEC) and error notification (ERMSG) functionalities are provided by the set top box (STB), the mobile device (MD) comprising, in a mobile device hardware layer (HW_{MD}), mobile device processing components (µP_{MD}), a mobile device memory (MEM_{MD}), a connection interface (CNI) to a mobile network (MN) and/or Internet (IP) and a user interface (UI_{MD}), the mobile device (MD) comprising, in a mobile device software layer (SW_{MD}), a remote application (RAPP) and a user interface application (UIA), the method comprising the steps of:
- connecting the mobile device (MD) to the set top box (STB);
- constantly checking (STBS) a status of the set top box (STB); and
- implementing a user command by
• requesting a command (COMᵢ) according to a user instruction on the mobile device (MD) from a list of possible commands (COMₛ) via the user interface (UI_{MD}) and the user interface application (UIA);
• if the requested command (COMᵢ) is accepted by the remote application (RAPP), the remote application (RAPP) transcodes the requested command (COMᵢ) into an accepted command (ACOMᵢ) and transmits it to the set top box (STB) through the adaptation layer (ADL), the set top box (STB) controlling the television (TV) so as to cause the accepted command (ACOMᵢ) to be completed and the adaptation layer (ADL) changes the status of the set top box (STB) with respect to the accepted command (SCACOMᵢ), the remote application (RAPP) notifies and displays (DISP) completion to the user by means of the mobile device (MD) when the accepted command has been completed by checking said status with respect to the accepted command (SCACOMᵢ);
• if the requested command (COMᵢ) is rejected, the remote application (RAPP) notifies and displays (DISP) rejection to the user by means of the mobile device (MD).

2. The method of controlling the connected television of claim 1, wherein connecting the mobile device (MD) to the set top box (STB) includes initiating an internet connection, maintaining the connection alive and/or notifying when a disconnection occurs.

3. The method of controlling the connected television according to claim 1 or 2, wherein checking (STBS) the status of the set top box (STB) includes checking for an update and updating the software layer (SW_{STB}) of the set top box (STB).

4. The method of controlling the connected television according to anyone of claims 1 to 3, wherein the list of possible commands (COMₛ) requestable by the user and/or displayed to the user via the user interface (UI_{MD}) and the user interface application (UIA) is dependent on a result of checking the status of the set top box (STB).

5. The method of controlling the connected television according to anyone of claims 1 to 4, wherein the set top box (STB) further comprises a mass storage drive (DD) such that a further recording function (RECF) is provided by the set top box (STB).

6. The method of controlling the connected television according to anyone of claims 1 to 5, wherein the status of the set top box (STB) comprises a list of status information chosen among the groups comprising mass storage device information, Internet connection according to Internet Protocol, level of sound volume, video format, audio selection, subtitle selection, parental control, displayed live content information, displayed online content information, displayed stored video information, scheduled recording, downloading information, mass storage content listing information.

7. A connected television system comprising a set top box (STB) connectable to a television (TV) and a mobile device (MD) associated with the set top box (STB), the set top box (STB) comprising, in a set top box hardware layer (HW_{STB}), set top box processing components (µP_{STB}), a set top box memory (MEM_{STB}), a tuner module (TUN) and an interface module (INT), the set top box (STB) being arranged to be connected to Internet (IP), the set top box (STB) comprising, in a set top box software layer (SW_{STB}), operating system (OS) and drivers (DRV), a middleware layer (MW), a simplified application (SAPP) and an adaptation layer (ADL), the set top box (STB) not comprising applications (APP) and application interface (API) such that only tuning (TNG), video decoding (VIDDEC), audio decoding (AUDDEC), security/authentication/decrypting (SEC) and error notification (ERMSG) functionalities are provided by the set top box (STB), the mobile device (MD) comprising, in a mobile device hardware layer (HW_{MD}), mobile device processing components (µP_{MD}), a mobile device memory (MEM_{MD}), a connection interface (CNI) to a mobile network (MN) and/or Internet (IP) and a user interface (UI_{MD}), the mobile device (MD) comprising, in a mobile device software layer (SW_{MD}), a remote application (RAPP) and a user interface application (UIA), the system being arranged to:
- connect the mobile device (MD) to the set top box (STB);
- constantly check (STBS) a status of the set top box (STB); and
- implement a user command by
• requesting a command (COMᵢ) according to a user instruction on the mobile device (MD) from a list of possible commands (COMₛ) via the user interface (UI_{MD}) and the user interface application (UIA);
• if the requested command (COMᵢ) is accepted by the remote application (RAPP), the remote application (RAPP) transcodes the requested command (COMᵢ) into an accepted command (ACOMᵢ) and transmits it to the set top box (STB) through the adaptation layer (ADL), the set top box (STB) controlling the television (TV) so as to cause the accepted command (ACOMᵢ) to be completed and the adaptation layer (ADL) changes the status of the set top box (STB) with respect to the accepted command (SCACOMᵢ), the remote application (RAPP) notifies and displays (DISP) completion to the user by means of the mobile device (MD) when the accepted command has been completed by checking said status with respect to the accepted command (SCACOMᵢ);
• if the requested command (COMᵢ) is rejected, the remote application (RAPP) notifies and displays (DISP) rejection to the user by means of the mobile device (MD).

8. The connected television system of claim 7, wherein the set top box comprises an interface to a wireless local area network or to a local router connected to internet such that connecting the mobile device (MD) to the set top box (STB) includes initiating an internet connection, maintaining the connection alive and/or notifying when a disconnection occurs.

9. The connected television system according to claim 7 or 8, wherein when the mobile device (MD) check (STBS) the status of the set top box (STB), the mobile device (MD is arranged to check for an update and to update the software layer (SW_{STB}) of the set top box (STB).

10. The connected television system according to anyone of claims 7 to 9, wherein the list of possible commands (COMₛ) requestable by the user and/or displayed to the user via the user interface (UI_{MD}) and the user interface application (UIA) is dependent on a result of checking the status of the set top box (STB).

11. The connected television system according to anyone of claims 7 to 10, wherein the set top box (STB) further comprises a mass storage drive (DD) such that a further recording function (RECF) is provided by the set top box (STB).

12. The connected television system according to anyone of claims 7 to 11, wherein the status of the set top box (STB) comprises a list of status information chosen among the groups comprising mass storage device information, Internet connection according to Internet Protocol, level of sound volume, video format, audio selection, subtitle selection, parental control, displayed live content information, displayed online content information, displayed stored video information, scheduled recording, downloading information, mass storage content listing information.

13. The connected television system according to anyone of claims 7 to 12, wherein the mobile device (MD) is a smartphone (SP) or a computer tablet (TAB).

14. A set top box (STB) of a connected television system, the set top box (STB) being connectable to a television (TV) wherein the set top box (STB) is arranged to implement the method of controlling the connected television according to anyone of claims 1 to 6 when associated with a mobile device (MD).

15. An integrated television set including a built-in connected television (TV) and a built-in set top box (STB), wherein the built-in set top box (STB) is arranged to implement the method of controlling the connected television according to anyone of claims 1 to 6 when associated with a mobile device (MD).
